# EUROPEAN PATENT APPLICATION

(11) **EP 2 826 746 A1**
(43) Date of publication of application: **21.01.2015**
(21) Application number: 13176600.8
(22) Date of filing: 16.07.2013
(51) Int. Cl.: C01B 3/34, C10G 45/00, C10G 65/04, C10K 3/04

(54) **Process for producing hydrogen**

(71) Applicant: HALDOR TOPSOE A/S, 2800 Kgs. Lyngby (DK)
(72) Inventor: Estrup, Maja, 2300 Copenhagen (DK); Andersen, Niels Ulrik, 2820 Gentofte (DK)

(57) **Abstract**

The invention relates to a process for the production of hydrogen from a hydrocarbon feedstock comprising unsaturated hydrocarbons, the process comprising recycling synthesis gas to the hydrocarbon feedstock.

## Description

The present invention relates to a process for the production of hydrogen. In particular the invention relates to a process for producing hydrogen from a hydrocarbon feedstock comprising unsaturated hydrocarbons (olefins), in which produced synthesis gas is recycled and mixed with such hydrocarbon feedstock.

The hydrocarbon feedstock typically used for production of hydrogen is natural gas, liquefied petroleum gas, naphtha and refinery gas. Feedstock containing olefins is in particularly refinery gas, also called refinery fuel gas which is often used as part of the hydrocarbon feedstock. Refinery gas may for instance be provided from a separate refinery plant as an off-gas stream. Hydrocarbon feedstock used for the production of synthesis gas and downstream products such as hydrogen, often contain sulphur compounds that need to be removed since these act as poisons for the catalysts used in the process. Normally the removal of sulphur compounds is achieved by hydrodesulfurisation (HDS). Hydrodesulphurisation of the hydrocarbon feedstock consists of first hydrogenation followed by desulphurisation, normally by absorption to produce a gas which is suitable for the downstream synthesis gas generation.

When the feedstock contains unsaturated hydrocarbons, these will also be hydrogenated. The hydrogenation of these compounds is a highly exothermic reaction which requires careful control.

In few instances, the hydrogenation of a hydrocarbon feed gas for synthesis gas production needs not be followed by sulphur absorption if the feedstock is basically sulphur free but contains olefins. An example of such a feedstock with high olefin content but free of sulphur may be tail gas from Fischer-Tropsch synthesis for the production of liquid hydrocarbons, or as mentioned above, refinery gas.

Due to the high exothermicity of the olefin hydrogenation stage it is known to provide a recycle around the hydrogenator reactor. The recycle may be conducted by means of a compressor or ejector. A maximum fraction of the olefin rich stream such as refinery gas may be defined if multiple feedstocks are used.

Instead of recycling around the hydrogenator, it is also known as disclosed in US-A-2009/0265988 to dilute the olefin content of the hydrocarbon feedstock by recycling hydrogen produced in the process. No details on operation conditions like concentrations, feed and hydrogen ratios or temperatures are specified in this citation.

WO-A-20117033280 discloses a hydrodesulphurisation process (HDS) comprising the use of specific catalysts, with recycle of reformed gas comprising hydrogen as source of hydrogen for HDS.

It has now been found that by combining synthesis gas produced downstream rather than a purified hydrogen stream with a hydrocarbon feedstock comprising a high concentration of olefins, a surprising advantage in terms of energy efficiency is obtained.

It is therefore an object of the present invention to provide a superior process for production of hydrogen.

This and other objects are achieved by the present invention according to the following features in correspondence with the appended claims:
1. Process for the production of hydrogen comprising:
   (a) passing a hydrocarbon feedstock through a hydrogenation stage to produce a hydrogenated feedstock,
   (b) passing the resulting gas of step (a) through one or more reforming stages to produce a raw synthesis gas,
   (c) passing the raw synthesis gas through one or more water-gas-shift stages to produce a synthesis gas with an increased hydrogen concentration,
   (d) passing the raw synthesis gas of step (b) or the synthesis gas with an increased hydrogen concentration of step (c) through a separation stage to produce separate streams of hydrogen product and off-gas comprising carbon dioxide,
   (e) mixing at least a portion of the raw synthesis gas of step (b), at least a portion of the synthesis gas with an increased hydrogen concentration of step (c), or a combination of both, with the hydrocarbon feedstock of step (a) .
2. Process according to feature 1 wherein step (c) is omitted.
3. Process according to feature 1 or 2 wherein the hydrocarbon feedstock is selected from the group consisting of: refinery gas, natural gas, naphtha, associated gas, LPG, coke oven gas, tail gas and combinations thereof.
4. Process according to any of features 1-3 wherein step (a) further comprises a step of passing the hydrogenated feedstock through a desulfurisation stage to form a desulfurised hydrocarbon feedstock.
   Accordingly, the resulting gas of step (a) may suitably be a hydrogenated feedstock, or a desulfurised hydrocarbon feedstock.
5. Process according to any of features 1-4 wherein step (a) further comprises a step of passing the hydrocarbon feedstock or the desulfurised hydrocarbon feedstock through a pre-reforming stage to form a pre-reformed gas.
6. Process according to any of features 1-5 wherein the raw synthesis gas of step (b), or the synthesis gas with an increased hydrogen concentration of step (c), has passed through a step of cooling and separation of liquid water from the gas prior to mixing with the hydrocarbon feedstock of step (a).
   Hence, preferably the synthesis gas that is recycled and mixed with the hydrocarbon feedstock is dewatered synthesis gas.
7. Process according to any of features 1-6 further comprising using at least a portion of the hydrogen product stream of step (d) in the hydrogenation stage of step (a).
8. Process according to any of features 1-7 wherein the reforming stage of step (b) comprises steam methane reforming (SMR), heat exchange reforming (HER), autothermal reforming (ATR), or a combination thereof.
9. Process according to any of features 1-8 wherein a portion of hydrogen product of step (d) is mixed with at least a portion of the raw synthesis gas of step (b) or the synthesis gas with increased hydrogen concentration of step (c) .

As mentioned above, by the invention it has been found that it is now possible to significantly increase the energy efficiency of the process by recycling synthesis gas to the hydrocarbon feedstock rather than hydrogen product. Further, it has also been found that the increase of flow of feed and fuel is lower than that required when recycling purified hydrogen thereby enabling a significantly lower volumetric flow through the plant. As a consequence the plant costs are reduced; in particular, expensive equipment such as the recycle compressor transporting the gas to the hydrocarbon feedstock can be made significantly smaller.

In one specific embodiment, the separation stage of step (d) is conducted via a Pressure Swing Adsorption unit (PSA). Recycling synthesis gas from upstream the separation stage unit, eliminates the loss of hydrogen to the fuel system caused by the efficiency of the purification technology.

In one embodiment of the invention, the concentration of olefins, particularly ethylene, propylene, butenes and pentenes, in the hydrocarbon feedstock is at least 4 vol%, preferably above 5 vol%, more preferably 6% or higher. Preferably these olefins are contained in the refinery gas

The highest temperature difference which is desirable in the hydrogenation stage is 100°C.

As recited above the hydrocarbon feedstock may also contain a significant concentration of unsaturated hydrocarbons (olefins), particularly where a refinery gas is used as part of the hydrocarbon feedstock. Refinery gas may for instance be provided from a separate refinery plant as an off-gas stream. Accordingly, in a particular embodiment of the invention the hydrocarbon feedstock is refinery gas.

In another particular embodiment, the hydrocarbon feedstock is a combination of refinery gas and natural gas; or a combination of refinery gas, and a separate stream of natural gas, naphtha and LPG.

In another embodiment, the hydrocarbon feedstock may comprise tail gas from Fischer-Tropsch synthesis for production of liquid hydrocarbons. Such tail gas comprises normally also a significant content of olefins.

In another embodiment, the hydrocarbon feedstock may comprise tail gas from downstream synthesis for production of gasoline from oxygenates including methanol and dimethyl ether.

As used herein the term tail gas means tail gas from Fischer-Tropsch synthesis for production of liquid hydrocarbons, or tail gas from downstream synthesis for production of gasoline from oxygenates including methanol and dimethyl ether, or a combination of both.

Accordingly, in another particular embodiment, the hydrocarbon feedstock is tail gas. Where the hydrocarbon feedstock is tail gas, the amount of sulfur in this feed gas is so low that there is no need of conducting a desulfurisation stage. Hydrogenation is suitably conducted by means of a hydrogenator comprising a hydrogenation catalyst, preferably a copper based catalyst such a Cu/ZnO catalyst.

In another particular embodiment, the hydrocarbon feedstock is a combination of tail gas and refinery gas.

As used herein the term desulfurisation means a sulphur removal stage, suitably conducted independently of a previous hydrogenation stage.

Normally the hydrogenation and desulfurisation are conducted in a hydrodesulfurisation stage (HDS) as described above, where sulfur compounds in the hydrocarbon feedstock are converted to H₂S via addition of hydrogen under the presence of a catalyst such as CoMo or NiMo catalysts, with subsequent removal of H₂S via a ZnO bed.

In a particular embodiment, the combination of steam methane reforming (SMR) and heat exchange reforming (HER) is conducted in a single reforming unit combining radiant heat transfer and convection.

In another particular embodiment a portion of hydrogen product of step (d) is mixed with at least a portion of the raw synthesis gas of step (b) or the synthesis gas with increased hydrogen concentration of step (c), suitably after removing water from either synthesis gas. In other words, a fraction of the hydrogen product can be mixed with the synthesis gas stream which is recycled.

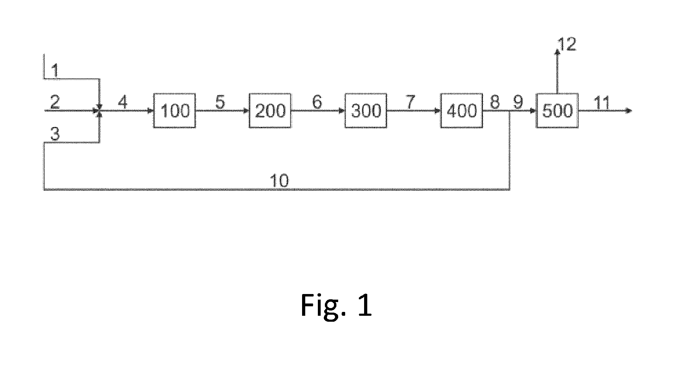

The invention is further illustrated by reference to the attached figure which shows a schematic of a specific embodiment of the invention.

In the figure a refinery gas stream 1 is mixed with natural gas 2 and recycled synthesis gas 3 to form a hydrocarbon feedstock 4. The hydrocarbon feedstock 4 is passed through a hydrogenation stage in hydrogenator 100 to form a hydrogenated gas 5. This gas passes then through a desulphurization stage in desulphurization unit 200, thus forming a feed gas 6 ready for reforming which is mixed with steam (not shown). The reforming is conducted in steam methane reformer (SMR) 300 using natural gas as fuel (not shown) resulting in a raw synthesis gas 7 containing hydrogen, carbon monoxide, carbon dioxide, unconverted methane and inerts. The raw synthesis gas 7 is then enriched in hydrogen while the concentration of carbon monoxide is reduced through water gas shift (WGS) in WGS unit 400 followed by cooling and separation of unconverted liquid water (not shown). The resulting synthesis gas 8 is then split into synthesis gas stream 9 and recycle synthesis gas stream 10. Synthesis gas stream 9 is passed through a separation stage in the form of Pressure Swing Adsorption (PSA) in PSA unit 500, resulting in a hydrogen product stream 11 and off-gas stream 12 containing mainly carbon dioxide.

### Example:

The impact in terms of energy efficiency, here quantified as Specific Net Energy Consumption (SNEC) is shown for a typical hydrogen plant utilizing refinery gas as the feedstock and containing a high concentration of both hydrogen and olefins. The higher the energy efficiency the lower the SNEC.

The concentration of olefins, particularly ethylene, propylene, butenes and pentenes, in the refinery gas is 6 mole%.

In the example the desired maximum adiabatic temperature increase in the hydrogenation reactor is 100°C.

In the following table the key figures for required hydrogen recycle for olefin containing refinery gas is given. All cases have equal reforming temperature, steam to carbon ratio and PSA recovery efficiency with natural gas and PSA off-gas used as fuel to a steam methane reformer.

**Table 1: Flow of feed, fuel, recycle gas and energy consumption (SNEC) per 1000 Nm³ produced hydrogen**

| | Unit | Base case | Hydrogen recycle | Syngas recycle |
|---|---|---|---|---|
| Feed + fuel flow | Nm³ | 394 | 410 | 404 |
| Recycle hydrogen | Nm³ | 0 | 250 | 0 |
| Recycle syngas | Nm³ | 0 | 0 | 174 |
| Hydrogenator ΔT | °C | 126 | 100 | 100 |
| Synthesis gas flow | Nm³ | 1739 | 2103 | 1933 |
| Relative synthesis gas flow | % | 100 | 121 | 111 |
| SNEC (feed+fuel) | Gcal | 3.68 | 3.84 | 3.77 |
| Relative SNEC (feed+fuel) | % | 100 | 104 | 102 |

The base case shows that the applied refinery feed causes a hydrogenator temperature increase of 126°C which is above the desired 100°C. No hydrogen recycle is applied as the hydrogen required for the hydrogenation reactions is present in the feed gas. In the hydrogen recycle case the temperature is reduced by recycle of 250 Nm³ of hydrogen (20% of the total production). The recycle of hydrogen, as for instance disclosed in US-A-2009/0265988, increases the specific net energy consumption, SNEC, significantly, mainly due to the loss of produced hydrogen in the PSA to the off-gas used as fuel. This causes the required flow of feedstock to increase in order to obtain the required flow of export hydrogen product.

In the syngas recycle case according to the present invention (see last column of the table), a portion of the synthesis gas after steam methane reforming and after water gas shifting, yet prior to hydrogen separation (purification) in a Pressure Swing Adsorption unit (PSA) is recycled and mixed with the refinery gas feedstock.

Recycling synthesis gas from upstream the PSA eliminates the loss of hydrogen to the fuel system caused by the efficiency of the purification technology. In the synthesis gas recycle case according to the present invention the required volumetric recycle flow is reduced as shown in the line of the table giving the relative synthesis gas flow. This surprising and significant reduction in volumetric flow enables reducing equipment size and thereby significant savings in the plant. In particular, expensive equipment such as the recycle compressor can be made much smaller.

The example shows that recycle of synthesis gas up-stream purification (e.g. PSA) is a superior process in particular it is a more energy efficient way of reducing the hydrogenator temperature increase when processing olefins (unsaturated hydrocarbons).

The increase in efficiency with respect to the pure hydrogen recycle case, as shown at the bottom of the table based on the SNEC values, is significant and surprising: the expected result would have been an increase in SNEC (conversely a decrease in energy efficiency) or at best the same SNEC, yet the SNEC is reduced by 2%, which in terms of efficiency is significant, particularly considering that the theoretical minimum value is 2.81 Gcal. For a typical plant producing 100,000 Nm³ H₂/h, this yearly energy saving represents about 1% of the capital investments for such a plant.

## Claims

1. Process for the production of hydrogen comprising:
(a) passing a hydrocarbon feedstock through a hydrogenation stage to produce a hydrogenated feedstock,
(b) passing the resulting gas of step (a) through one or more reforming stages to produce a raw synthesis gas,
(c) passing the raw synthesis gas through one or more water-gas-shift stages to produce a synthesis gas with an increased hydrogen concentration,
(d) passing the raw synthesis gas of step (b) or the synthesis gas with an increased hydrogen concentration of step (c) through a separation stage to produce separate streams of hydrogen product and off-gas comprising carbon dioxide,
(e) mixing at least a portion of the raw synthesis gas of step (b), at least a portion of the synthesis gas with an increased hydrogen concentration of step (c), or a combination of both, with the hydrocarbon feedstock of step (a) .

2. Process according to claim 1 wherein step (c) is omitted.

3. Process according to claim 1 or 2 wherein the hydrocarbon feedstock is selected from the group consisting of: refinery gas, natural gas, naphtha, associated gas, LPG, coke oven gas, tail gas and combinations thereof.

4. Process according to any of claims 1-3 wherein step (a) further comprises a step of passing the hydrogenated feedstock through a desulfurisation stage to form a desulfurised hydrocarbon feedstock.

5. Process according to any of claims 1-4 wherein step (a) further comprises a step of passing the hydrocarbon feedstock or the desulfurised hydrocarbon feedstock through a pre-reforming stage to form a pre-reformed gas.

6. Process according to any of claims 1-5 wherein the raw synthesis gas of step (b), or the synthesis gas with an increased hydrogen concentration of step (c), has passed through a step of cooling and separation of liquid water from the gas prior to mixing with the hydrocarbon feedstock of step (a).

7. Process according to any of claims 1-6 further comprising using at least a portion of the hydrogen product stream of step (d) in the hydrogenation stage of step (a).

8. Process according to any of claims 1-7 wherein the reforming stage of step (b) comprises steam methane reforming (SMR), heat exchange reforming (HER), autothermal reforming (ATR), or a combination thereof.

9. Process according to any of claims 1-8 wherein a portion of hydrogen product of step (d) is mixed with at least a portion of the raw synthesis gas of step (b), or the synthesis gas with increased hydrogen concentration of step (c) .
